# EUROPEAN PATENT APPLICATION

(11) **EP 4 044 090 A1**
(43) Date of publication of application: **17.08.2022**
(21) Application number: 21157113.8
(22) Date of filing: 15.02.2021
(51) Int. Cl.: G06Q 20/34, G06Q 20/32

(54) **VIRTUAL PAYMENTS**

(71) Applicant: Nokia Technologies Oy, 02610 Espoo (FI)
(72) Inventor: LAAKSONEN, Lasse Juhani, 33210 Tampere (FI); LEHTINIEMI, Arto Juhani, 33880 Lempäälä (FI); LEPPÄNEN, Jussi Artturi, 33580 Tampere (FI)
(74) Representative: Nokia EPO representatives

(57) **Abstract**

Example embodiments are disclosed relating to an apparatus, method and computer program relating to virtual payments. The apparatus may comprise means for: detecting insertion of one or more physical payment cards to an accessory associated with a user terminal, and enabling, based on the detected insertion, one or more virtual payment cards respectively corresponding to the one or more physical payment cards, for making payments.

## Description

### Field

Example embodiments relate to an apparatus, method and computer program relating to virtual payments.

### Background

In order to make a payment for goods and/or services using a physical payment card, e.g. a debit, credit or other card (e.g. pre-paid voucher), it is no longer necessary to present the physical payment card at the point of sale. For example, it is known to store one or more virtual payment cards on a user terminal, in what is generally referred to as a "digital wallet." A physical payment card can be converted to a virtual payment card, for example by entering details appearing on the physical payment card into a digital wallet application and/or by photographing the card using the digital wallet application.

A user can thereafter use the virtual payment card to make so-called virtual payments for goods and/or services purchased, for example, via e-commerce sites accessed using the user terminal.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, this specification describes an apparatus, comprising means for detecting insertion of one or more physical payment cards to an accessory associated with a user terminal; and enabling, based on the detected insertion, one or more virtual payment cards respectively corresponding to the one or more physical payment cards, for making payments.

The apparatus may further comprise means for: detecting removal of a physical payment card of the one or more physical payment cards from the accessory; and disabling, based on the detected removal, the virtual payment card corresponding to the removed physical payment card for making payments.

The disabling means may be configured to re-enable the virtual payment card corresponding to the removed physical payment card if re-inserted.

The apparatus may further comprise means for: determining an order associated with a plurality of inserted virtual payment cards; and identifying, based on the determined order, a default virtual payment card for making payments using the user terminal and one or more secondary virtual payment cards requiring user selection for making payments using the user terminal.

The means for determining the order may be configured to determine a temporal order in which the plurality of physical payment cards are inserted to the accessory.

The default virtual payment card may be identified as that corresponding to the physical payment card determined as first in the temporal order.

In the event that a physical payment card is detected as removed from the accessory, the virtual payment card corresponding to the removed physical payment card may be removed from the determined order if not detected as re-inserted within a predetermined time period from removal.

The accessory may comprise an ordered plurality of receiving portions for respectively receiving insertion of a physical payment card, wherein the determined order is based on the order of receiving portions in which a physical payment card has been inserted.

The ordered plurality of receiving portions may have an associated priority order, wherein the default virtual payment card is identified as that corresponding to the physical payment card inserted in a receiving portion having the highest priority order.

The apparatus may further comprise means for: displaying a user interface associated with a digital wallet application of the user terminal, wherein the user interface indicates one or more inserted virtual payment cards; receiving selection of a user interface element associated with one of the one or more inserted virtual payment cards; responsive to a received selection, enabling setting of one or more properties associated with the selected virtual payment card.

The means for enabling a user setting may be configured to enable user setting of a default property such that the selected virtual payment card is set as a default virtual payment card in the digital wallet application in preference to one or more other virtual payment cards.

The means for enabling a user setting may be configured to enable user setting of a temporary property such that the selected virtual payment card is only enabled for making payments using the user terminal if the physical payment card is detected as inserted to the accessory.

The means for enabling a user setting may be configured to enable user setting of a payment limit property such that the selected virtual payment card can only be enabled for payments up to a user-defined amount.

The means for enabling a user setting may be configured to enable user setting of a time period for which the one or more properties associated with the selected virtual payment card are applied.

The apparatus may further comprise means for: receiving identification of a second user terminal; and enabling the identified second user terminal to make payments using the selected virtual payment card based on the one or more properties.

The means for detecting the insertion of one or more physical payment cards may be responsive to one or more signals received from the accessory over short range communications channel.

The short range communications channel may be a Near Field Communications (NFC) channel.

According to a second aspect, this specification describes a method, comprising: detecting insertion of one or more physical payment cards to an accessory associated with a user terminal; and enabling, based on the detected insertion, one or more virtual payment cards respectively corresponding to the one or more physical payment cards, for making payments.

The method may further comprise detecting removal of a physical payment card of the one or more physical payment cards from the accessory, and disabling, based on the detected removal, the virtual payment card corresponding to the removed physical payment card for making payments.

The virtual payment card corresponding to the removed physical payment card may be re-enabled if re-inserted.

The method may further comprise determining an order associated with a plurality of inserted virtual payment cards; and identifying, based on the determined order, a default virtual payment card for making payments using the user terminal and one or more secondary virtual payment cards requiring user selection for making payments using the user terminal.

Determining the order may comprise determining a temporal order in which the plurality of physical payment cards are inserted to the accessory.

The default virtual payment card may be identified as that corresponding to the physical payment card determined as first in the temporal order.

In the event that a physical payment card is detected as removed from the accessory, the virtual payment card corresponding to the removed physical payment card may be removed from the determined order if not detected as re-inserted within a predetermined time period from removal.

The accessory may comprise an ordered plurality of receiving portions for respectively receiving insertion of a physical payment card, wherein the determined order is based on the order of receiving portions in which a physical payment card has been inserted.

The ordered plurality of receiving portions may have an associated priority order, wherein the default virtual payment card is identified as that corresponding to the physical payment card inserted in a receiving portion having the highest priority order.

The method may further comprise: displaying a user interface associated with a digital wallet application of the user terminal, wherein the user interface indicates one or more inserted virtual payment cards; receiving selection of a user interface element associated with one of the one or more inserted virtual payment cards; responsive to a received selection, enabling setting of one or more properties associated with the selected virtual payment card.

Enabling a user setting may comprise enabling user setting of a default property such that the selected virtual payment card is set as a default virtual payment card in the digital wallet application in preference to one or more other virtual payment cards.

Enabling a user setting may comprise enabling user setting of a temporary property such that the selected virtual payment card is only enabled for making payments using the user terminal if the physical payment card is detected as inserted to the accessory.

Enabling a user setting may comprise enabling user setting of a payment limit property such that the selected virtual payment card can only be enabled for payments up to a user-defined amount.

Enabling a user setting may comprise enabling user setting of a time period for which the one or more properties associated with the selected virtual payment card are applied.

The method may further comprise receiving identification of a second user terminal, and enabling the identified second user terminal to make payments using the selected virtual payment card based on the one or more properties.

Detecting the insertion of one or more physical payment cards may be responsive to one or more signals received from the accessory over short range communications channel.

The short range communications channel may be a Near Field Communications (NFC) channel.

According to a third aspect, this specification describes a computer program comprising instructions for causing an apparatus to perform at least the following: detecting insertion of one or more physical payment cards to an accessory associated with a user terminal; and enabling, based on the detected insertion, one or more virtual payment cards respectively corresponding to the one or more physical payment cards, for making payments.

Example embodiments of the third aspect may also provide any feature of the second aspect.

According to a fourth aspect, this specification describes a computer-readable medium (such as a non-transitory computer-readable medium) comprising program instructions stored thereon for performing at least the following: detecting insertion of one or more physical payment cards to an accessory associated with a user terminal; and enabling, based on the detected insertion, one or more virtual payment cards respectively corresponding to the one or more physical payment cards, for making payments.

According to a fifth aspect, this specification describes an apparatus comprising: at least one processor; and at least one memory including computer program code which, when executed by the at least one processor, causes the apparatus to: detect insertion of one or more physical payment cards to an accessory associated with a user terminal; and enable, based on the detected insertion, one or more virtual payment cards respectively corresponding to the one or more physical payment cards, for making payments.

### Brief Description of Drawings

Example embodiments will now be described, by way of non-limiting example, with reference to the accompanying drawings, in which:
FIG. 1 is a perspective view of a system comprising a user terminal and an accessory for attachment to the user terminal according to some example embodiments;
FIG. 2 is a perspective view of the FIG. 1 accessory;
FIG. 3 is a cross-sectional view of another accessory for attachment to a user terminal according to some example embodiments;
FIG. 4 is a cross-sectional view of the FIG. 3 accessory with a plurality of physical payment cards shown inserted;
FIG. 5 is a flow diagram of processing operations according to one or more example embodiments;
FIG. 6 is a flow diagram of processing operations according to one or more other example embodiments;
FIG. 7 is a rear plan view of the FIG. 1 system, when receiving a physical payment card to the accessory;
FIG. 8 is a front plan view of the FIG. 1 system, showing a user interface of the user terminal;
FIG. 9 is a front plan view of the FIG. 1 system, showing another user interface of the user terminal;
FIG. 10 is a rear plan view of the FIG. 1 system, when receiving a physical payment card in different orientations;
FIG. 11A is a representational view of first and second user terminals being used for assigning a virtual payment card from the first user terminal to the second user terminal according to some example embodiments;
FIG. 11B is a rear plan view of the FIG. 11A first user terminal;
FIG. 11C is a front plan view of the FIG. 11A second user terminal, showing a user interface thereof;
FIG. 12 shows an apparatus in accordance with an example embodiment; and
FIG. 13 shows a non-transitory media in accordance with an example embodiment.

### Detailed Description

Example embodiments relate to an apparatus, method and computer program relating to virtual payments. In the context of the present disclosure, virtual payments may refer to a payment made via a user terminal, e.g. a mobile handset or tablet computer, storing one or more virtual payment cards. A virtual payment card may be digital version of a physical payment card, such as a debit card, credit card, store card or a pre-paid card, e.g. a gift token.

Virtual payments may therefore refer to payments for goods and/or services made via a website, e.g. an e-commerce website, or an application of the user terminal through which in-application purchases can be made, e.g. for paying for food or a taxi ride. Virtual payments may also refer to contactless payments made by bringing the user terminal close to a payment terminal, e.g. in a store or railway station. Contactless payments may be made by means of Near-Field Communications (NFC) technologies which refer to a set of communications protocols between two terminals over a distance of approximately 4 cm or less. NFC is given as an example and other remote or contactless methods may be used.

A virtual payment card may be generated based on a physical payment card.

For example, some user terminals provide a so-called "digital wallet" application through which details of physical payment cards can be entered and stored in the digital wallet. One method is for a user to manually enter a requested number, dates and/or security code that may appear on the physical payment card to the digital wallet application. Another method is to capture a photograph of at least one side of the physical payment card in order that the above-mentioned numbers, dates and/or security codes can be recognised and provided to the digital wallet application. Another method is to use an NFC channel or related wireless technologies to transfer the numbers, dates and/or security codes from an integrated circuit (IC) chip embedded in the card to the digital wallet application using an appropriate (e.g. NFC) reader of the user terminal with which the NFC channel is established. Another method is to obtain the numbers, dates and/or security codes from a magnetic strip of the card using a magnetic strip reader.

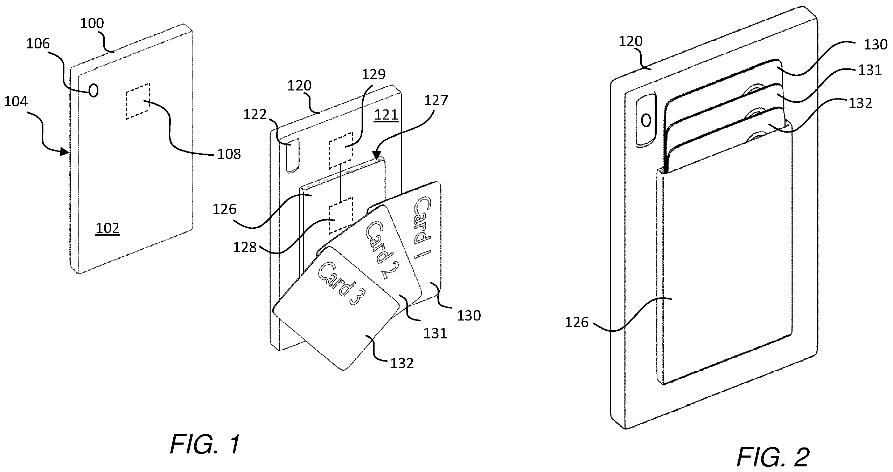

FIG. 1 shows a system according to one or more example embodiments.

The system may comprise a user terminal 100 and an accessory 120 for attachment to the user terminal.

The user terminal 100 is shown with a rear surface 102 visible and a front surface 104 shown hidden. The front surface 104 may comprise a display for output of one or more user interfaces and through which user inputs may be made via, e.g. a touch-sensitive screen. The rear surface 102 may comprise a rear-facing camera 106 for capturing images or videos. A front-facing camera (not shown) may also be provided on the front surface 104. A first antenna 108 associated with a short-range communications technology which is usable by the user terminal 100, such as NFC or Bluetooth is also indicated, and may be embedded within the body of the user terminal 100. The first antenna 108 may be used to set-up, for example, an NFC channel with another antenna of another device.

The accessory 120 may be a wallet accessory for insertion of one or more physical payment cards. The term wallet accessory 120 will be used hereafter. The term insertion is intended to cover partial insertion of one or more physical payment cards.

The wallet accessory 120 may comprise a case portion 121 adapted to attach to the user terminal 100, e.g. in the manner of a protective case that locates around the periphery of the user terminal 100 and which may cover the rear surface 102 whilst leaving the front surface 104 visible. The case portion 121 may therefore have dimensions adapted to the particular model of the user terminal 100 to ensure a snug friction fit. The case portion 121 may comprise an aperture 122 which corresponds to the location of the rear-facing camera 106 of the user terminal 100.

On a rear surface of the case portion 121 may be provided a pouch 126 which is adapted to receive insertion of one or more physical payment cards 130 - 132, as indicated in FIG. 2. The pouch 126 may comprise an upper opening 127. The gap between the main rear wall of the pouch 126 and the case portion 121 may determine how many physical payment cards 130 - 132 can be inserted. When the one or more physical payment cards 130 - 132 are inserted through the upper opening 127, they may be retained from dropping-out in the manner of a conventional wallet, e.g. by pressure exerted by the main rear wall and/ or side walls of the pouch 126.

A contactless card reader 128 may be provided as part of the wallet accessory 120, at a location generally corresponding to the location of the one or more physical payment card ICs when inserted in a particular orientation. The contactless card reader 128 may be connected to a second antenna 129 for at least transmitting data (e.g. the aforementioned numbers, dates and/or security codes) read from the one or more physical payment card ICs for reception by the first antenna 108 of the user terminal 100 using, for example, and NFC channel. The position of the second antenna 129 may be configured to substantially correspond to that of the first antenna 108 when the wallet accessory 120 is attached to the user terminal 100.

As mentioned, FIG. 2 shows the FIG. 1 wallet accessory 120 when attached to the user terminal 100.

The attachment of the wallet accessory 120 to the user terminal 100 may additionally, or alternatively, involve other means, such as by magnetic attachment or a semi-permanent adhesive attachment. For example, some mobile terminals manufacturers have proposed magnetic units within the body of the mobile terminal which, in use, align and attach to oppositely polarised magnetic units in accessories, and through which charging power and/or data can be received.

It will therefore be appreciated that the case portion 121 is not a necessary part of the wallet accessory 120 but is useful in that assists in aligning the first and second antennas 108, 129.

Example embodiments may relate to operations performed based on use of an accessory, such as the wallet accessory 120 or other wallet accessories which may be described later on. For example, based on detecting insertion of one or more physical payment cards to the wallet accessory 120, i.e. within the pouch 126, one or more operations may be performed by the user terminal 100.

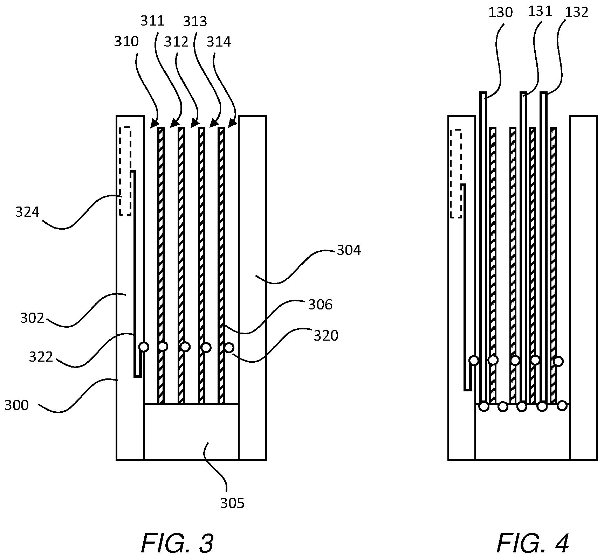

FIGs. 3 and 4 are cross-sectional views of a second wallet accessory 300 according to some example embodiments, described and shown as an alternative to the wallet accessory 120 shown in FIGs. 1 and 2. The wallet accessory 120 shown in FIGs. 1 and 2 may be referred to as the first wallet accessory, for ease of reference.

The second wallet accessory 300 is shown without a case portion 121 which may be substantially the same as that used for the first wallet accessory 120 or which may be attached to the user terminal 100 by other means.

The second wallet accessory 300 may comprise a front wall 302, a rear wall 304 and a base wall 305 defining an interior chamber having a plurality of upstanding dividers 306 defining a plurality of card-retaining slots 310 - 314 for receiving individual physical payment cards. Each of the card-retaining slots 310 - 314 may comprise a contactless card reader 320 for sensing insertion of a physical card within that respective card-retaining slot, by means of sensing contact with and/or by receiving data from the IC (or magnetic strip) when inserted in a particular orientation. When no physical payment card is inserted, there is no contact and/or no data is received by the contactless card reader 320 of that card-retaining slot.

The contactless card reader 320 of a particular card-retaining slot 310 - 314 may also read data (e.g. the aforementioned numbers, dates and/or security codes) from the IC of the physical payment card for passing to a second antenna 324 via a cable or data bus 322 for transmitting to the first antenna 108 of the user terminal 100 using, for example, NFC technology. The position of the second antenna 324 is configured to substantially correspond to that of the first antenna 108 when the second wallet accessory 300 is attached to the user terminal 100.

The second wallet accessory 300 in this case comprises five card-retaining slots 310 - 314 for insertion of up to five physical payment cards. Each of the five card-retaining slots 310 - 314 may comprise an identifiable and ordered index number, e.g. a first card-retaining slot 310 may have the index # 1, the second card-retaining slot 311 may have the index #2, and so on.

FIG. 4 shows the first, second and third physical payment cards 130 - 132 when inserted in, in this case, the first, third and fourth card-retaining slots 310, 312, 313 respectively.

FIGs. 2 and 4 therefore show a possibly common situation, namely one where a user may have a plurality of physical payment cards that they wish to use as virtual payment cards for a more convenient and intuitive virtual payment experience.

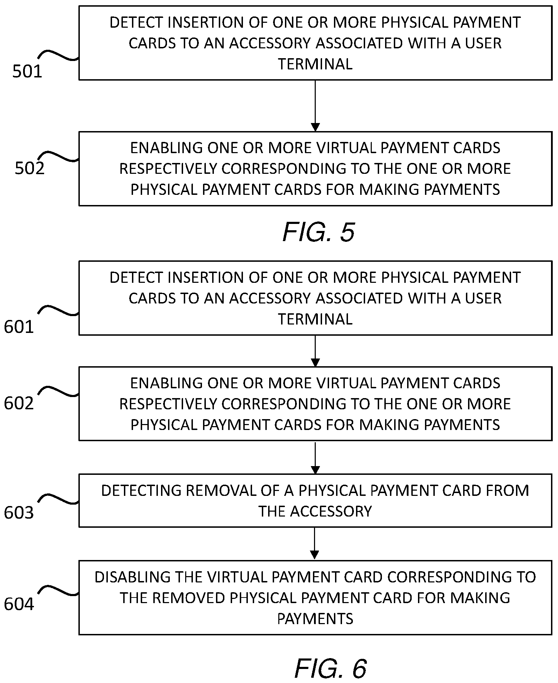

FIG. 5 is a flow diagram is shown indicating processing operations that may be performed by the user terminal 100 in conjunction with a wallet accessory, such as the first or second wallet accessory 120, 300. The processing operations may be performed by hardware, software, firmware or a combination thereof.

A first operation 501 may comprise detecting insertion of one or more physical payment cards to an accessory associated with a user terminal.

A second operation 502 may comprise enabling one or more virtual payment cards, respectively corresponding to the one or more physical payment cards, for making payments.

Thus, in example embodiments, a virtual payment card may be enabled for making payments based on detecting insertion of a corresponding physical payment card in the accessory.

Note that payments may be made by the user terminal 100 or another user device which is paired with the user terminal. For example, the other user device may be a smart watch or similar.

For example, with reference to the first wallet accessory 120 shown in FIG. 1, insertion of the first physical payment card 130 may be detected by the contactless card reader 128 and a detection signal transmitted via the second antenna 129 to the first antenna 108 of the user terminal 100.

If there is a first virtual payment card which corresponds to the first physical payment card 130 already stored or associated with the digital wallet application of the user terminal 100, then its detection may enable it for making virtual payments. A user interface associated with the digital wallet application may also be opened for enabling user setting of one or more properties of the first virtual payment card, as will be explained later on.

In some embodiments, if there is no first virtual payment card already stored or associated with the digital wallet application of the user terminal 100, first-time detection may also open a user interface associated with the digital wallet application for enabling setting of the first virtual payment card as a new virtual payment card. This may involve receiving the aforementioned numbers, dates and/or security codes from the IC of the physical payment card. This may also involve enabling setting of one or more properties of the first virtual payment card.

FIG. 6 is another flow diagram is shown indicating processing operations that may be performed by the user terminal 100 in conjunction with a wallet accessory, such as the first or second wallet accessory 120, 300. The processing operations may be performed by hardware, software, firmware or a combination thereof.

First and second operations 601, 602 maybe the same as the first and second operations 501, 502 described above with reference to FIG. 5.

A third operation 603 may comprise detecting removal of a physical payment card from the accessory.

A fourth operation 604 may comprise disabling the virtual payment card corresponding to the removed physical payment card for making payments.

In some embodiments, therefore, removal of the physical payment card, e.g. the first physical payment card 130, from the first wallet accessory 120 or the second wallet accessory 300 may prevent a user from using the corresponding first virtual payment card by means of the digital wallet application of the user terminal 100.

This disabling may not necessarily delete or remove the first virtual payment card from the digital wallet application. It may merely disable it for the duration that the first physical payment card 130 is removed. This thereby provides a useful control means by which a user can ensure which cards are enabled (or "active") to avoid, for example, accidentally using a virtual payment card associated with a business account for personal use, or vice versa, simply by removing the physical payment card from the first wallet accessory 120 or the second wallet accessory 300.

The disabling action may be indicated on a user interface associated with the digital wallet application, e.g. by displaying the disabled virtual payment card in another form, e.g. shaded, faded or in a different colour.

The disabled virtual payment card may be re-enabled if the corresponding physical payment card is re-inserted.

In some embodiments, the removal of the physical payment card, e.g. the first physical payment card 130, from the first wallet accessory 120 or the second wallet accessory 300 may cause the corresponding first virtual payment card to be deleted or removed from the digital wallet application if not re-inserted within a predetermined time period, e.g. 24 hours after removal, after which it will be treated as a new physical payment card as mentioned above. This provides a useful and intuitive way of keeping the number of virtual payment cards to a manageable number, and avoids storing unnecessary data and details on a memory of the user terminal 100.

In some embodiments, if there are a plurality of inserted virtual payment cards associated with the digital wallet application of the user terminal 100, an order may be associated with them. A default virtual payment card and one or more secondary virtual payment cards may be determined based on the order. The default virtual payment card may be that which currently will be used, presented or suggested for payment when making a purchase. The one or more secondary virtual payment cards may require some user selection (or re-ordering, based on the description below) in order to be used for payment.

For example, the order may be based on a temporal order in which the plurality of physical payment cards are inserted into the accessory.

With reference to FIGs. 1 and 2, for example, if the first physical payment card 130 is initially inserted into the pouch 126 of the first wallet accessory 120, followed by the second and third physical payment cards 131, 132, then the first virtual payment card may be treated as the default virtual payment card, followed by the second virtual payment card and then the third virtual payment card.

If the first physical payment card 130 is subsequently removed from the first wallet accessory 120, then the first virtual payment card may be disabled from making payments unless re-inserted, as mentioned above. Are-ordering of virtual payment cards may or may not result as a result of the removal. For example, if the first physical payment card 130 is re-inserted within a predetermined time period, e.g. within 1 minute, then the corresponding first virtual payment card may retain its previous place in the order, i.e. first, and may still be treated as the default virtual payment card. This may prevent re-ordering for brief use of the first physical payment card, e.g. when the user is in a shop and wishes or needs to use the physical version. Otherwise, the first virtual payment card may be moved to the end of the order, e.g. after the second and third virtual payment cards 131, 132, the second virtual payment card 131 becoming the new default virtual payment card.

In the case of the second wallet accessory 300, or similar, the order may be based on which receiving portions, e.g. which card-retaining slot 310 - 314, a physical payment card is inserted within. As mentioned above, each card-retaining slot 310 - 315 may have an associated index number which may refer to a priority order. For example, the first card-retaining slot 310 having the index # 1 may be the highest priority and the fifth card-retaining slot 314 having an index #5 may be the lowest priority, or vice versa.

As shown in FIG. 4, the first, second and third physical payment cards 130 - 132 are inserted in the first, third and fourth card-retaining slots 310, 312, 313 respectively. This may mean that the first virtual payment card will be considered the default payment card because the first physical payment card 130 is in the highest priority card-retaining slot 310. This may be regardless of the temporal order of insertion. The second virtual payment card corresponding the second physical payment card 131 will be considered the next in priority order, and the third virtual payment card corresponding the third physical payment card 132 will be the least in priority order. If another card, e.g. a fourth physical payment card, is subsequently inserted in, for example, the second card-retaining slot 311, then the corresponding fourth virtual payment card that is created will replace the second virtual payment card as second in the priority order. The second and third virtual payment cards will move down the priority order accordingly.

In some embodiments, a particular virtual payment card may be set as the default virtual payment card regardless of the priority order mentioned above. However, the other virtual payment cards may be ordered in the manner described above, i.e. based on the temporal order of insertion or the card-retaining slots they are inserted within.

This provides another intuitive and useful way for a user to manage and keep track of virtual payment cards and switch around which cards have priority over others based on temporal or slot -based insertions.

In some embodiments, the default virtual payment card may not be required in the first wallet accessory 120 or the second wallet accessory 300 at a time of making payments, although it will initially need to be inserted in order to enable it and to set it as the default virtual payment card. A further input, e.g. a password or fingerprint, may be needed at the time of making payments using the default virtual payment card.

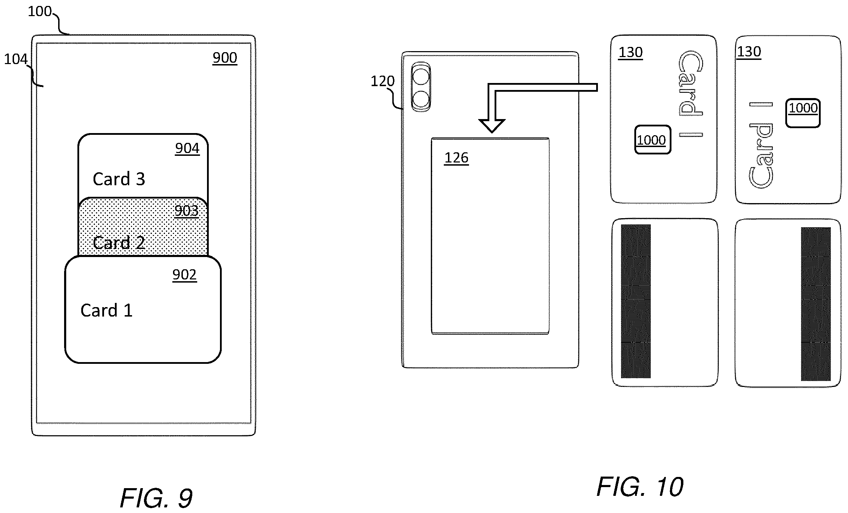

In some embodiments, a user interface associated with the digital wallet application may indicate a priority order of two or more virtual payment cards based on the above determinations. FIG. 9 shows a user interface 900 which indicates one such method of indicating a priority order. In some embodiments, the priority order may be manually adjusted, e.g. by selecting a virtual payment card and moving it forwards or backwards on the user interface 900.

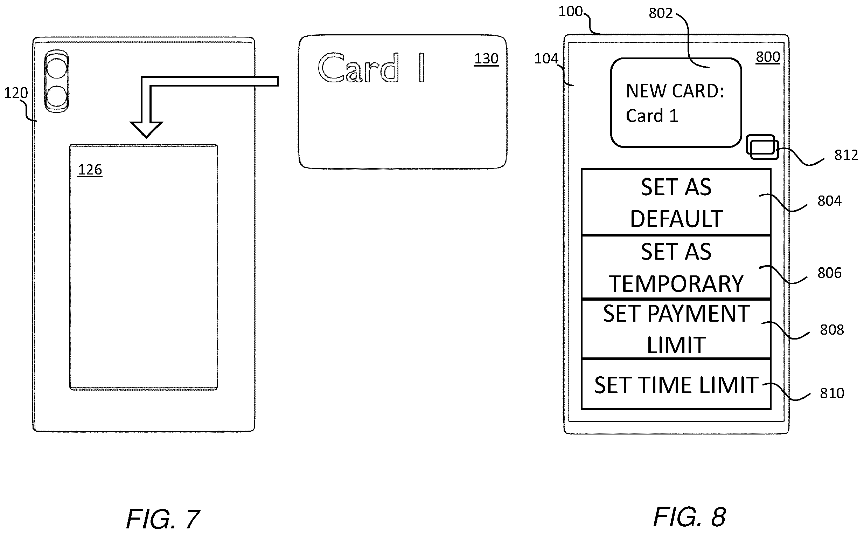

Referring now to FIGs. 7 and 8, one or more further operations that may be performed by the user terminal 100, e.g. by the digital wallet application, will now be described.

FIG. 7 shows the above-mentioned first physical payment card 130 inserted into the pouch 126 of the first wallet accessory 120. It will be appreciated that corresponding operations may be performed for insertion of a physical payment card to the second wallet accessory 300.

FIG. 8 is a user interface 800 associated with the digital wallet application that may appear upon detecting insertion of the first physical payment card 130.

The user interface 800 may indicate the detection of the first physical payment card by displaying an indication of the corresponding first virtual payment card, here indicated by reference number 802. This indication may also indicate that the relevant numbers, dates and/or security codes have been acquired. The user interface 800 may display one or more user interface elements 804 - 810 associated with the first virtual payment card 802.

A particular user interface element 804 - 810 may enable user selection for setting one or more properties associated with the first virtual payment card 802.

For example, a first user interface element 804 may enable, when selected, the user to set a so-called "default" property, in other words set the first virtual payment card 802 as a default virtual payment card in the digital wallet application in preference to one or more other virtual payment cards. If set, this may cause the first virtual payment card 802 to replace any current default virtual payment card, and may even enable the first virtual payment card for payments when not inserted in the first wallet accessory 120, although one or more further verification or confirmation inputs may be needed of the user for this to happen.

For example, a second user interface element 806 may enable, when selected, the user to set a so-called "temporary" property, in other words set the first virtual payment card 802 as a temporary virtual payment card. If set, this may mean that the corresponding first physical payment card 130 needs to be inserted into the first wallet accessory 120 (or the second wallet accessory 300) when making payments using the first virtual payment card. In this case, one or more further verification or confirmation inputs may not be needed.

For example, a third user interface element 808 may enable, when selected, the user to set a so-called "payment limits" property, in other words set one or more payment limits associated with use of the first virtual payment card 802 up to a user-defined amount. For example, the user may set a monetary limit on a per-transaction, per-day and/or per-week basis. For example, this could be extended to set-up an automated tipping amount or percentage for a particular type of service, e.g. for restaurant payments or limited to a particular chain of restaurants.

For example, a fourth user interface element 810 may enable, when selected, the user to set a time period for which the one or more properties associated with the first virtual payment card 802 is or are applied. So, for example, the first virtual payment card 802 might be set as the default virtual payment card with a 300 Euro daily payment limit for one week. This might be useful if, for example, the first virtual payment card 802 corresponds to a business credit card and the user is travelling for business over the next week. The user reduces the risk of paying from a personal account, whilst also avoiding overspending outside of the payment limit and/or travel period.

FIG. 8 also shows a selectable icon 8 12 for enabling the user to switch to a different user interface 900 of the digital wallet application, shown in FIG. 9, which may indicate virtual payment cards currently associated with the digital wallet application and their respective enabled or disabled statuses.

FIG. 9 shows in the different user interface 900 first to third virtual payment cards 902, 903, 904 respectively corresponding the first to third physical payment cards 130, 131, 132 shown in FIGs. 1-3. The first virtual payment card 902 may refer to the same virtual payment card indicated by reference numeral 802 in FIG. 8.

The first virtual payment card 902 may be indicated as the default virtual payment card by means of it being "on top" or "in front of' the other virtual payment cards 903, 904.

Alternatively, or additionally, the larger size or some other visual manner of indicating the first virtual payment card 902 as the default virtual payment card may be used.

The second virtual payment card 903 may be shown in a different colour, shading or other visual manner to indicate that it is not currently active, i.e. disabled. This may be due to it being set as a temporary virtual payment card and the corresponding physical payment card not being inserted in the wallet accessory 120, 300. The third virtual payment card 904 in this case is enabled but is third in the priority order. As mentioned above, the second virtual payment card 903 may be removed from the order if, for example, it is not re-inserted after a predetermined time period and/or if the user selects to remove or re-order any of the first, second or third virtual payment cards 902, 903, 904 via the different user interface 900.

The different user interface 900 therefore allows the user to track their current virtual payment cards 902, 903, 904 and their respective statuses.

In some embodiments, one way for a user to selectively enable and/or disable a particular virtual payment card whist still carrying the corresponding physical card in the wallet accessory 120, 300 is to re-orient the physical payment card so that it cannot be detected or its data read.

As shown in FIG. 10, if the first physical payment card 130 is inserted in the manner indicated on the upper left-hand side, the contactless card reader 128 of the wallet accessory 120, 300 may be aligned with an IC of the first physical payment card, whereas, if rotated by 180 degrees, it is not aligned and hence not detected or enabled. Similarly, as indicated by the lower left and right -hand sides, flipping the first physical payment card 130 over and/or rotating (if a magnetic strip reader is provided) is another option. Alternatively still, the rear-facing camera 106 of the user terminal 100 may be employed to detect the orientation and/or side of the first physical payment card 130 as is it inserted. This is yet another way by which the user can avoid accidentally making payments with inappropriate virtual payment cards, yet still use the wallet accessory 120, 300 as a wallet.

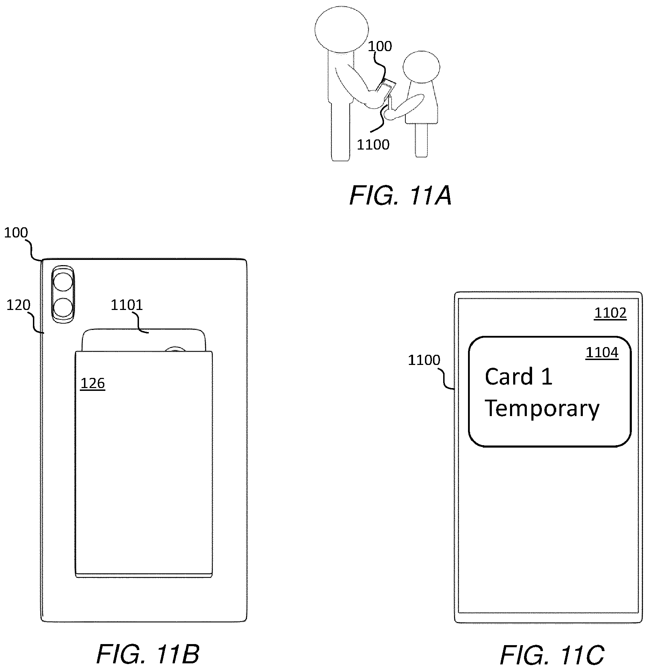

Referring now to FIGs. 11A- 11C, there may be circumstances in which a user of the user terminal 100 may wish to assign one of their virtual payment cards, and any user-set properties, to a second user terminal. This may comprise identifying a second user terminal and enabling the identified second user terminal to make payments using a selected virtual payment card, based on one or more properties, e.g. as described with reference to FIG. 8.

For example, with reference to FIG. 11A, the user of the user terminal 100 may be an adult and the user of a second user terminal 1100 may be a child. The adult may wish to assign a virtual payment card to their child based on the one or more properties, which may include that the assigned virtual payment card is a default card (not requiring the physical payment card to be present in the second user terminal 1100) but has a 50 Euro payment limit and is time limited to six hours. The adult may assign the virtual payment card and the properties to the second user terminal 1100 by means of selecting an option in a user interface and then using NFC or similar to effect the assignment. The adult may thereafter, via the user terminal 100, track the usage of the one or more properties, e.g. current spending and/or time remaining, and may also be able to track the location of the second user terminal 1100. The adult may also, via the user terminal 100, be able to disable the assigned virtual payment card and/or change any set properties. The communications channel over which such control by the user terminal 100 can be made may be a WiFi or Cellular communications channel.

FIG. 11B shows the first wallet accessory 120 located on the user terminal 100, with a physical payment card 1101 inserted in the pouch 126 and FIG. 11C shows a user interface 1102 of the second user terminal 1100 showing an assigned virtual payment card 1104 corresponding to the physical payment card of FIG. 11B.

In summary, example embodiments disclose an apparatus, method and computer program by means of which a user may, via a user terminal in association with an accessory, manage one or more virtual payment cards, how and when they may be used for payments, and set related properties.

### Example Apparatus

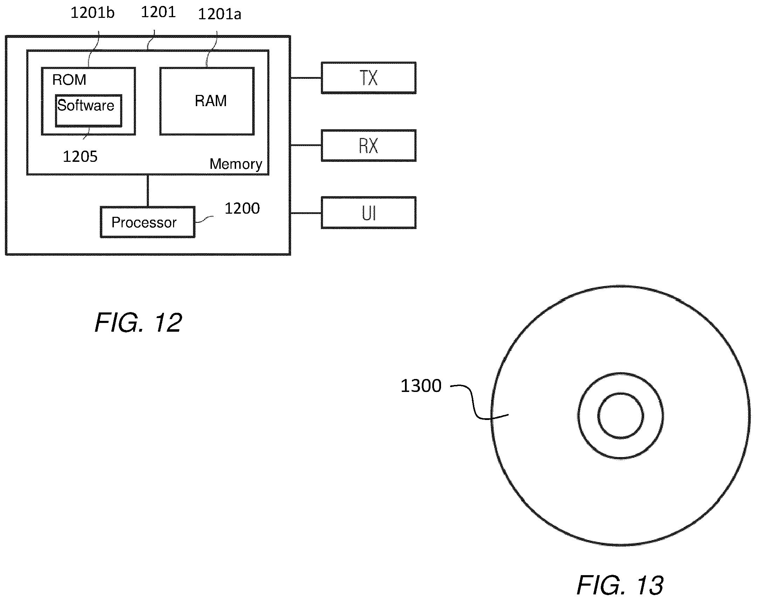

FIG. 12 shows an apparatus according to some example embodiments, which may comprise the user terminal 100. The apparatus may be configured to perform the operations described herein, for example operations described with reference to any disclosed process. The apparatus comprises at least one processor 1200 and at least one memory 1201 directly or closely connected to the processor. The memory 1201 includes at least one random access memory (RAM) 1201a and at least one read-only memory (ROM) 1201b. Computer program code (software) 1205 is stored in the ROM 1201b. The apparatus may be connected to a transmitter (TX) and a receiver (RX). The apparatus may, optionally, be connected with a user interface (UI) for instructing the apparatus and/or for outputting data. The at least one processor 1200, with the at least one memory 1201 and the computer program code 1205 are arranged to cause the apparatus to at least perform at least the method according to any preceding process, for example as disclosed in relation to the flow diagrams of FIGs. 5 and/or 6 and related features thereof.

FIG. 13 shows a non-transitory media 1300 according to some embodiments. The non-transitory media 1300 is a computer readable storage medium. It may be e.g. a CD, a DVD, a USB stick, a blue ray disk, etc. The non-transitory media 1300 stores computer program code, causing an apparatus to perform the method of any preceding process for example as disclosed in relation to the flow diagrams of FIGs. 3 and/or 4 and related features thereof.

Names of network elements, protocols, and methods are based on current standards. In other versions or other technologies, the names of these network elements and/or protocols and/ or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising means for:
detecting insertion of one or more physical payment cards to an accessory associated with a user terminal; and
enabling, based on the detected insertion, one or more virtual payment cards respectively corresponding to the one or more physical payment cards, for making payments.

2. The apparatus of claim 1, further comprising means for:
detecting removal of a physical payment card of the one or more physical payment cards from the accessory; and
disabling, based on the detected removal, the virtual payment card corresponding to the removed physical payment card for making payments.

3. The apparatus of claim 2, wherein the disabling means is configured to re-enable the virtual payment card corresponding to the removed physical payment card if re-inserted.

4. The apparatus of any preceding claim, further comprising means for:
determining an order associated with a plurality of inserted virtual payment cards; and
identifying, based on the determined order, a default virtual payment card for making payments using the user terminal and one or more secondary virtual payment cards requiring user selection for making payments using the user terminal.

5. The apparatus of claim 4, wherein the means for determining the order is configured to determine a temporal order in which the plurality of physical payment cards are inserted to the accessory.

6. The apparatus of claim 5, wherein the default virtual payment card is identified as that corresponding to the physical payment card determined as first in the temporal order.

7. The apparatus of claim 5 or claim 6, wherein, in the event that a physical payment card is detected as removed from the accessory, the virtual payment card corresponding to the removed physical payment card is removed from the determined order if not detected as re-inserted within a predetermined time period from removal.

8. The apparatus of claim 4, wherein the accessory comprises an ordered plurality of receiving portions for respectively receiving insertion of a physical payment card, wherein the determined order is based on the order of receiving portions in which a physical payment card has been inserted.

9. The apparatus of claim 8, wherein the ordered plurality of receiving portions have an associated priority order, wherein the default virtual payment card is identified as that corresponding to the physical payment card inserted in a receiving portion having the highest priority order.

10. The apparatus of any preceding claim, further comprising means for:
displaying a user interface associated with a digital wallet application of the user terminal, wherein the user interface indicates one or more inserted virtual payment cards;
receiving selection of a user interface element associated with one of the one or more inserted virtual payment cards;
responsive to a received selection, enabling a user setting of one or more properties associated with the selected virtual payment card.

11. The apparatus of claim 10, wherein the means for enabling a user setting is configured to enable user setting of one or more of:
a default property such that the selected virtual payment card is set as a default virtual payment card in the digital wallet application in preference to one or more other virtual payment cards;
a temporary property such that the selected virtual payment card is only enabled for making payments using the user terminal if the physical payment card is detected as inserted to the accessory;
a payment limit property such that the selected virtual payment card can only be enabled for payments up to a user-defined amount.

12. The apparatus of claim 10 or claim 11, wherein the means for enabling a user setting is configured to enable user setting of a time period for which the one or more properties associated with the selected virtual payment card are applied.

13. The apparatus of any of claims 10 to 12, further comprising means for:
receiving identification of a second user terminal;
enabling the identified second user terminal to make payments using the selected virtual payment card based on the one or more properties.

14. The apparatus of any preceding claim, wherein the means for detecting the insertion of one or more physical payment cards is responsive to one or more signals received from the accessory over short range communications channel.

15. A method, the method comprising:
detecting insertion of one or more physical payment cards to an accessory associated with a user terminal; and
enabling, based on the detected insertion, one or more virtual payment cards respectively corresponding to the one or more physical payment cards, for making payments.
